# EUROPÄISCHE PATENTSCHRIFT

(11) **EP 3 031 109 B1**
(45) Veröffentlichungstag und Bekanntmachung des Hinweises auf die Patenterteilung: **30.01.2019**
(21) Anmeldenummer: 14744597.7
(22) Anmeldetag: 30.07.2014
(51) Int. Cl.: H02H 9/00, H02H 9/04, H02H 9/06, H01T 15/00

(54) **FUNKENSTRECKENANORDNUNG**
SPARK GAP ARRANGEMENT
SYSTÈME D'ÉCLATEUR

(30) Priorität: 09.08.2013 DE 102013108658
(43) Veröffentlichungstag der Anmeldung: 15.06.2016
(73) Patentinhaber: TDK Electronics AG, 81671 München (DE)
(72) Erfinder: BOBERT, Peter, 14612 Falkensee (DE); DORSCH, Eduard, 14624 Dallgow-Döberitz (DE); WERNER, Frank, 13591 Berlin (DE)
(74) Vertreter: Epping - Hermann - Fischer
(86) Internationale Anmeldenummer: PCT/EP2014/066404
(87) Internationale Veröffentlichungsnummer: WO 2015/018719

(56) Entgegenhaltungen:
- EP-A1- 0 933 860
- EP-A2- 1 077 519
- US-A- 3 943 427
- US-A1- 2012 008 239

## Beschreibung

Die Erfindung betrifft eine Funkenstreckenanordnung mit einer triggerbaren Funkenstrecke.
Herkömmliche triggerbare Funkenstrecken weisen üblicherweise wenigstens drei Elektroden auf. Beispielsweise sind die Elektroden in einem gasgefüllten Raum angeordnet, wobei durch Anlegen einer entsprechenden Spannung an eine der Elektroden, vorzugsweise an eine Triggerelektrode, eine Funkenstrecke zwischen den Elektroden gezündet wird. Beispielsweise entsteht dabei in dem gasgefüllten Raum eine ionisierte Strecke, über die ein Strom zwischen den Elektroden fließt. Solche triggerbaren Funkenstrecken können beispielsweise Bestandteile von Überspannungsableitern sein, die elektrische Komponenten, insbesondere mit einer Gleichspannung betriebene elektrische Komponenten, vor einer Überspannung schützen sollen. Zu diesem Zweck kann die triggerbare Funkenstrecke an eine Betriebsspannung der jeweiligen elektrischen Komponente angeschlossen sein. Beipielsweise bei einem abrupten Spannungsanstieg kann die triggerbare Funkenstrecke die anliegende Betriebsspannung kurzschließen. Die triggerbare Funkenstrecke ist weiterhin zweckmäßigerweise mit einer Sicherung verbunden, die, sobald ein Strom zwischen den Elektroden der triggerbaren Funkenstrecke fließt, das heisst die triggerbare Funkenstrecke zündet oder auslöst, die Sicherung anspricht und den Stromkreis der elektrischen Komponente unterbricht.

Das Dokument US 3,943,427 A, das den nächstliegenden Stand der Technik wiedergibt, beschreibt eine Vorrichtung, die Thyristoren vor Überspannung schützt. Die Vorrichtung weist eine Funkenstrecke und Dioden auf. Ferner werden Kondensatoren bereitgestellt, wobei einer der Kondensatoren über einen Transformator entlädt, dessen Sekundärseite an die Funkenstrecke gekoppelt ist.

Eine zu lösende Aufgabe ist es, eine Funkenstreckenanordnung anzugeben, bei der die triggerbare Funkenstrecke in einem vorgegebenen Spannungsbereich zündet.

Diese Aufgabe wird durch die Funkenstreckenanordnung mit den Merkmalen des Patentanspruchs 1 gelöst. Vorteilhafte Ausgestaltungen und Weiterbildungen sind Gegenstand der abhängigen Patentansprüche.

Eine vorgeschlagene Funkenstreckenanordnung umfasst eine triggerbare Funkenstrecke und eine Triggerschaltung, die einen ersten und einen zweiten Ladungsspeicher, eine Spannungsbegrenzungskomponente, eine Triggerdiode, ein triggerbares Ableitelement und einen Transformator umfasst. Die Spannungsbegrenzungskomponente kann beispielsweise eine oder mehrere Halbleiterdioden umfassen. Die Spannungsbegrenzungskomponente und die Triggerdiode sind ausgelegt, einen Eingangsimpuls in einem vorbestimmten Spannungsbereich durchzuschalten und den ersten Ladungsspeicher aufzuladen.

Bei dem Eingangsimpuls kann es sich um einen unerwünschten, insbesondere für weitere verschaltete elektrische Komponenten schadhaften, elektrischen Spannungsimpuls handeln, der beispielsweise durch eine Fehlfunktion oder Zerstörung von Teilen der Schaltung hervorgerufen wird.

Die triggerbare Funkenstrecke ist derart eingerichtet, dass das triggerbare Ableitelement spannungsabhängig über dem ersten Ladungsspeicher durchschaltet und den zweiten Ladungsspeicher über eine Primärseite des Transformators entlädt. Eine Sekundärseite des Transformators ist mit der triggerbaren Funkenstrecke verbunden. Ein Vorteil der Funkenstreckenanordnung betrifft die Möglichkeit, beispielsweise bei elektronisch geregelten Spannungsumformern oder Spannungswandlern, welche spannungsempfindliche Bauelemente oder Komponenten aufweisen, als Überspannungsschutz zu fungieren. Die Triggerschaltung ist insbesondere vorgesehen, in dem Zusammenwirken mit der Funkenstreckenanordnung eine bestimmten Anforderungen genügende Spannungstoleranz zu erreichen, welche mit einer triggerbaren Funkenstrecke allein nicht erreichbar ist.

In einer bevorzugten Ausgestaltung liegt der vorbestimmte Spannungsbereich zwischen 420 Volt und 480 Volt. Durch diese Ausgestaltung wird zweckmäßigerweise erreicht, dass genau in dem genannten Spannungsbereich ein Eingangsimpuls von der Spannungsbegrenzungskomponente durchgeschaltet wird. Dies ermöglicht, dass die triggerbare Funkenstrecke auslöst beziehungsweise zündet. Zweckmäßigerweise ist der vorgegebene Spannungsbereich kleiner als eine Höchstspannung der elektrischen Komponente, welche vor Überspannung geschützt werden soll.

In einer bevorzugten Ausgestaltung liegt an der Triggerschaltung eine Gleichspannung als Betriebsspannung an.

In einer bevorzugten Ausgestaltung liegt an der Triggerschaltung eine Betriebsspannung zwischen 380 Volt und 420 Volt an. Durch diese Ausgestaltung kann die Funkenstreckenanordnung beispielsweise für eine Anwendung in elektronisch gesteuerten Spannungswandlern angepasst werden, welche bei dieser Betriebsspannung betrieben werden.

In einer bevorzugten Ausgestaltung hängt die Spannung, bei der die Spannungsbegrenzungskomponente den Eingangsimpuls durchschaltet, von der Betriebstemperatur der Triggerschaltung ab. Diese Abhängigkeit kann beispielsweise von einem thermischen Driftverhalten einer charakteristischen Spannung der Spannungsbegrenzungskomponente herrühren.

In einer bevorzugten Ausgestaltung umfasst die Spannungsbegrenzungskomponente eine Mehrzahl von Zener-Dioden. Durch diese Ausgestaltung kann besonders zweckmäßig eine Spannungsbegrenzungskomponente angegeben werden, die an den vorgegebenen Spannungsbereich angepasst ist. Die Zener-Dioden sind vorzugsweise in der Triggerschaltung in Reihe geschaltet, so dass die Betriebsspannung gleichmäßig über den Zener-Dioden abfällt. Die Zener-Dioden oder deren Anzahl kann derart dimensioniert oder angepasst sein, dass der Eingangsimpuls in dem vorgegebenen Spannungsbereich von den Zener-Dioden durchgeschaltet wird. Die Anzahl der Zener-Dioden oder die Zener-Dioden selbst sind vorzugsweise derart angepasst oder dimensioniert, dass die Spannungsbegrenzungskomponente den Eingangsimpuls nur dann durchschaltet, wenn die Spannung des Eingangsimpulses in dem vorbestimmten Spannungsbereich liegt.

Die Triggerschaltung kann alternativ einen Reihenwiderstand umfassen, welcher mit den Zener-Dioden in Reihe geschaltet ist, um die Spannung, welche über den Zener-Dioden abfällt, gegenüber der Betriebsspannung um die Spannung, welche über dem Reihenwiderstand abfällt, einzuschränken.

In einer bevorzugten Ausgestaltung ist die Spannungsbegrenzungskomponente derart ausgelegt, dass Toleranzen der Durchbruchspannungen der Zener-Dioden oder die Durchbruchspannungen selbst den vorbestimmten Spannungsbereich definieren. Die Durchbruch- beziehungsweise Zenerspannungen der Zener-Dioden können temperaturabhängig sein. Bei den Toleranzen der Durchbruchspannungen der Zener-Dioden handelt es sich vorzugsweise um temperaturbedingte Toleranzen.

In einer bevorzugten Ausgestaltung umfasst die Spannungsbegrenzungskomponente dreizehn Zener-Dioden mit einer Durchbruchspannung von je 33 Volt. Durch diese Ausgestaltung kann vorteilhafterweise ermöglicht werden, dass die temperaturabhängige Drift der Durchbruchspannungen den vorbestimmten Spannungsbereich definiert, derart dass die Spannungsbegrenzungskomponente innerhalb der Grenzen des vorbestimmten Spannungsbereichs den Eingangsimpuls durchschaltet. Weiterhin kann eine Durchschhaltspannung der Spannungsbegrenzungskomponente beispielsweise auf circa 420 Volt oder eine andere Spannung angesetzt werden.

Durch den positiven Temperaturkoeffizienten der Durchbruchspannungen der Zener-Dioden wird zweckmäßigerweise erreicht, dass sich diese Durchbruchspannung temperaturbedingt über einen Spannungsbereich, insbesondere den vorgegebenen Spannungsbereich erstreckt oder verteilt, so dass sichergestellt werden kann, dass in dem vorgegebenen Spannungsbereich ein Durchschalten des Eingangsimpulses durch die Spannungsbegrenzungskomponente erfolgt.

In einer bevorzugten Ausgestaltung definiert die Summe der Durchbruchspannungen der Zener-Dioden eine untere Grenze des vorgegebenen Spannungsbereichs.

In einer bevorzugten Ausgestaltung definiert die maximale Temperaturdrift der Durchbruchspannungen während eines Betriebs der Triggerschaltung die obere Grenze des vorgegebenen Spannungsbereichs. Insbesondere kann dabei die obere Grenze des vorgegebenen Spannungsbereichs durch die höchste Durchschaltspannung der Zener-Dioden während des Betriebs der Triggerschaltung definiert werden.

In einer bevorzugten Ausgestaltung umfasst das triggerbare Ableitelement einen Thyristor, wobei die Triggerdiode in Reihe zu der Spannungsbegrenzungskomponente geschaltet und eingerichtet ist, den Thyristor in Abhängigkeit der Spannung über dem ersten Ladungsspeicher leitend zu schalten. Wenn also die Spannung über dem ersten Ladungsspeicher die Durchschaltspannung erreicht, wird die Triggerdiode in einen leitenden Zustand überführt, so dass ein Steuerstrom auf die Steuerelektrode des Thyristors geführt wird, um diesen zu zünden beziehungsweise leitend zu schalten. Der Thyristor ist dabei mit dem zweiten Ladungsspeicher so verschaltet, dass eine Entladung über die Primärseite des Transformators erfolgt.

In einer bevorzugten Ausgestaltung umfasst die Triggerschaltung einen ersten Widertand, wobei der erste Widerstand derart eingerichtet ist, dass der zweite Ladungsspeicher im Betrieb der Triggerschaltung auf eine Spannung zwischen 280 Volt und 320 Volt, vorzugsweise 300 Volt aufgeladen wird.

In einer bevorzugten Ausgestaltung umfasst die Triggerschaltung einen zweiten Widerstand, wobei die Triggerschaltung eingerichtet ist, den ersten Ladungsspeicher über den zweiten Widerstand durch den Eingangsimpuls aufzuladen. Der erste Ladungsspeicher kann ein Kondensator, insbesondere ein Entkoppelkondensator sein, um ein unerwünschtes Durchschalten des Thyristors zu verhindern.

In einer bevorzugten Ausgestaltung umfasst die Triggerschaltung eine weitere Spannungsbegrenzungskomponente, welche eingerichtet ist, die Spannung an der Primärseite des Transformators auf einen vorgegebenen Wert zu begrenzen. Bei der Begrenzung handelt es sich vorzugsweise um einen Überspannungsschutz der Primärseite des Transformators. Der vorgegebene Wert kann eine vorgegebene Höchstspannung der Primärseite des Transformators sein.

In einer bevorzugten Ausgestaltung umfasst die Triggerschaltung einen dritten Widerstand, wobei die Triggerschaltung derart eingerichtet ist, dass der erste Widerstand und der dritte Widerstand einen Spannungsteiler für die Betriebs- oder Primärspannung der Triggerschaltung und/oder des Transformators bilden. Über die Widerstandswerte des ersten Widerstandes und des dritten Widerstandes beziehungsweise die Dimensionierung des Spannungsteilers kann vorteilhafterweise die Spannung bestimmt werden, auf die der zweite Ladungsspeicher im Betrieb der Triggerschaltung aufgeladen wird.

In einer bevorzugten Ausgestaltung weist die Funkenstreckenanordnung eine Sicherung auf, die mit der triggerbaren Funkenstrecke verbunden ist, wobei die Sicherung eingerichtet ist, eine elektrische Komponente von der Betriebsspannung zu trennen. Die elektrische Komponente kann ein elektronisches Bauteil sein, welches durch die Funkenstreckenanordnung vor einer Überspannung geschützt werden soll.

In einer bevorzugten Ausgestaltung ist die Triggerschaltung in ein Gehäuse zusammen mit der triggerbaren Funkenstrecke integriert.

In einer bevorzugten Ausgestaltung ist die triggerbare Funkenstrecke eine Gasentladungsfunkenstrecke oder ein gasgefüllter elektrischer Überspannungsableiter.

Ein weiterer Aspekt betrifft ein elektronisches Bauteil mit der Funkenstreckenanordnung. Das elektronische Bauteil weist die elektrische Komponente auf, wobei das elektronische Bauteil derart eingerichtet ist, dass an der elektrischen Komponente die Betriebsspannung anliegt. Durch diese Ausgestaltung kann die Funkenstreckenanordnung vorteilhafterweise an die Betriebsspannung der elektrischen Komponente angepasst werden, so dass die elektrische Komponente durch die Funkenstreckenanordnung vor einer Überspannung, welche die elektrische Komponente zerstören könnte, geschützt werden kann.

In einer bevorzugten Ausgestaltung ist die elektrische Komponente ein Superkondensator, der eine elektrische Höchstspannung von 500 Volt aufweist. Der Superkondensator kann zur Stabilisierung der Betriebsspannung, beispielsweise für eine Anwendung der Funkenstreckenanordnung in Spannungswandlern, eingesetzt werden.

In einer bevorzugten Ausgestaltung des elektronischen Bauteils, ist dieses ein, vorzugsweise elektronisch geregelter, Gleichspannungswandler.

Weitere Vorteile, vorteilhafte Ausgestaltungen und Zweckmäßigkeiten der Erfindung ergeben sich aus der folgenden Beschreibung der Ausführungsbeispiele in Verbindung mit den Figuren.

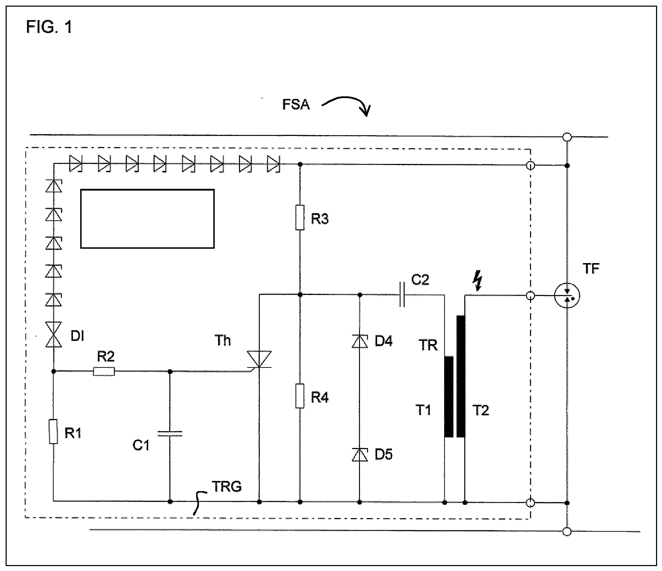

Figur 1 zeigt schematisch zumindest Teile eine Funkenstreckenanordnung mit einer Triggerschaltung.

Die Funkenstreckenanordnung FSA umfasst eine Triggerschaltung TRG und eine triggerbare Funkenstrecke TF. Die triggerbare Funkenstrecke ist beispielsweise eine Gasentladungsfunkenstrecke oder ein gasgefüllter elektrischer Überspannungsableiter. Die Triggerschaltung TRG ist mit der triggerbaren Funkenstrecke TF, verbunden. Die triggerbare Funkenstrecke ist vorzugsweise weiterhin mit einer Sicherung (nicht explizit dargestellt) verbunden, welche eingerichtet ist anzusprechen, sobald die triggerbare Funkenstrecke ausgelöst wird beziehungsweise zündet. Die Sicherung ist vorzugsweise vorgesehen, eine vor einer Überspannung zu schützenden elektrischen Komponente, welche mit der Triggerschaltung verschaltet sein kann, von der Betriebsspannung zu trennen.

Die Triggerschaltung TRG umfasst einen Transformator TR. Der Transformator TR kann ein Hochspannungstransformator sein. Eine Primärwicklung T1 des Transformators ist kleiner dargestellt als eine Sekundärwicklung T2, um auszudrücken, dass durch den Transformator TR vorzugsweise eine Spannungstransformation zwischen der Primärseite T1 und der Sekundärseite T2 des Transformators TR durchgeführt wird.

Die Triggerschaltung TRG umfasst, wie in Figur 1 dargestellt, eine Serienschaltung von Zener-Dioden, vorzugsweise 13 Zener-Dioden. Die Zener-dioden haben vorzugsweise eine Durchbruchspannung oder Zenerspannung von je 33 Volt. Auf diese Weise kann die Spannungsbegrenzungskomponente SBK derart ausgelegt werden, dass Toleranzen der Durchbruchspannungen der Zener-Dioden der Spannungsbegrenzungskomponente SBK den vorbestimmten Spannungsbereich definieren.

Die Durchbruchpannungen der Zener-Dioden können temperaturabhängig sein. Der Spannungsdurchbruch der Zener-Dioden kann durch den Lawineneffekt hervorgerufen sein. Dementsprechend kann der Temperaturkoeffizient der Durchbruchspannungen der Zener-Dioden positiv sein. Bei den Toleranzen der Durchbruchspannungen der Zener-Dioden handelt es sich vorzugsweise um temperaturbedingte Toleranzen.

Weiterhin in Reihe mit den Zener-Dioden ist ein Reihenwiderstand R1 geschaltet. Die in der Figur 1 dargestellten Zener-Dioden repräsentieren beispielhaft eine Spannungsbegrenzungskomponente SBK der Funkenstreckenanordnung FSA. Über die Dimensionierung des Widerstandes R1 kann beispielsweise der Spannungsabfall über der Spannungsbegrenzungskomponente SBK eingestellt werden.

Die Triggerschaltung TRG umfasst weiterhin eine Triggerdiode oder einen Diac DI. Die Triggerdiode DI ist in Reihe mit der Spannungsbegrenzungskomponente SBK geschaltet.

Die Triggerschaltung TRG umfasst weiterhin einen ersten Widerstand R3 und einen zweiten Widerstand R2.

Der erste Widerstand R3 kann beispielsweise einen Widerstandswert von 6,8 MΩ haben. Die Triggerschaltung TRG umfasst weiterhin einen ersten Ladungsspeicher C1. Die Triggerschaltung TRG umfasst weiterhin einen zweiten Ladungsspeicher C2. Der zweite Ladungsspeicher C2 ist mit einem Anschluss mit den Widerständen R3 und R4 und mit einem zweiten Anschluss mit der Primärwicklung T1 des Transformators TR verbunden. Die Kapazität des zweiten Ladungsspeichers kann beispielsweise 47 nF betragen.

Der zweite Widerstand R2 ist in Serie mit einem ersten Ladungsspeicher C1 geschaltet. Der zweite Widerstand R2 und der erste Ladungsspeicher C1 sind parallel zu dem Widerstand R1 geschaltet. Über den zweiten Widerstand R2 wird weiterhin der erste Ladungsspeicher C1 aufgeladen.

Die Spannungsbegrenzungskomponente SBK und die Triggerdiode DI sind weiterhin eingerichtet oder ausgelegt, einen, beispielsweise durch eine Überspannung hervorgerufenen, Eingangsimpuls in einem vorbestimmten Spannungsbereich durchzuschalten und den ersten Ladungsspeicher C1 über den zweiten Widerstand R2 aufzuladen.

Ein Eingangsimpuls durch eine solche Überspannung kann beispielsweise durch den Ausfall oder die Zerstörung einer Komponente der Schaltung oder Anwendung verursacht werden, in der die Funkenstreckenanordnung FSA eingesetzt wird. Die Funkenstreckenanordnung FSA kann beispielsweise in Gleichspannungswandlern eingesetzt werden. Eine solche Komponente kann beispielsweise ein Ausgangstransistor des genannten Gleichspannungswandlers sein.

Die Triggerschaltung weist weiterhin einen dritten Widerstand R4 auf, welcher zusammen mit dem ersten Widerstand R3 einen Spannungsteiler für die anliegende Betriebsspannung bildet. Der zweite Ladungsspeicher C2 ist parallel zu dem dritten Widerstand R4 geschaltet.

Der dritte Widerstand R4 kann beispielsweise einen Widerstandswert von 20 MΩ haben. Über den Spannungsteiler beziehungsweise die Dimensionierung des ersten Widerstands R3 und des dritten Widerstands R4 wird die Spannung bestimmt, auf welche der zweite Ladungsspeicher C2 im Betrieb der Triggerschaltung TRG aufgeladen wird. Die Triggerschaltung TRG ist vorzugsweise für einen Gleichspannungsbetrieb ausgelegt. Vorzugsweise wird eine Betriebsspannung zwischen 380 Volt und 420 Volt, vorzugsweise 400 Volt an die Triggerschaltung TRG angelegt.

Die Triggerschaltung TRG umfasst ferner einen Thyristor TH. Im Betrieb verbleibt auf dem zweiten Ladungsspeicher C2 vorzugsweise eine ausreichende Ladungsmenge beziehungsweise Spannung, um beim Kurzschluss über dem Thyristor TH einen ausreichenden Spannungspuls im Transformator TR zu erzeugen.

Die Triggerschaltung TRG umfasst weiterhin eine weitere Spannungsbegrenzungskomponente, welche beispielhaft durch die Zener-Dioden D4 und D5 repräsentiert ist. Die weitere Spannungsbegrenzungskomponente ist parallel zu dem dritten Widerstand R4 geschaltet. Die weitere Spannungsbegrenzungskomponente ist weiterhin eingerichtet, die Spannung an der Primärseite T1 des Transformators TR vor einer Überspannung zu schützen.

Im Betrieb der Funkenstreckenanordnung FSA wird beispielsweise der Ladungsspeicher C2 über den ersten Widerstand R3 auf eine Spannung zwischen 280 Volt und 320 Volt, vorzugsweise circa 300 Volt, aufgeladen. Die erste Spannungsbegrenzungskomponente SBK ist vorzugsweise derart ausgebildet, dass sie einen Eingangsimpuls in einem vorgegebenen Spannungsbereich zwischen 420 und 480 Volt durchschaltet.

Nach dem Durchschalten des Eingangsimpulses wird der erste Ladungsspeicher C1 über den zweiten Widerstand R2 aufgeladen. Der Thyristor TH wird dementsprechend durch die Ladespannung des ersten Ladungsspeichers C1 gezündet, so dass eine niederohmige Verbindung zwischen dem zweiten Ladungsspeicher C2 und dem unteren Anschluss der Primärwicklung T1 entsteht. Anders ausgedrückt ist der zweite Ladungsspeicher über den Thyristor TH und die Primärwicklung T1 kurzgeschlossen. Infolgedessen wird in der Primärwicklung T1 des Transformators TR ein Spannungspuls generiert, welcher auf der Sekundärseite T2 hochtransformiert zu einem Spannungsimpuls an der triggerbaren Funkenstrecke TF führt. Dieser Spannungsimpuls führt dann wiederum zu einem Triggern beziehungsweise Auslösen oder Zünden der triggerbaren Funkenstrecke TF.

Die Funkenstreckenanordnung FSA kann in einem elektronischen Bauteil oder für eine elektronische Schaltung (siehe oben) vorgesehen werden. Dieses elektronische Bauteil oder die Schaltung (nicht explizit dargestellt) kann eine elektrische Komponente, beispielsweise einen Superkondensator (nicht explizit dargestellt) umfassen, welche durch die Funkenstreckenanordnung vor einer Überspannung, die vorzugsweise der Betriebsspannung der Triggerschaltung TRG entspricht, geschützt werden. Eine Höchstspannung eines solchen Superkondensators beträgt vorzugsweise 500 Volt.

Alternativ kann eine Höchstspannung der elektrischen Komponente einen anderen Spannungswert aufweisen.

Obwohl dies nicht explizit beschrieben ist, umfasst die vorliegende Beschreibung ebenfalls Dimensionierungen der Komponenten der Triggerschaltung, welche vorliegend nicht explizit genannt sind. Insbesondere kann der vorgegebene Spannungsbereich anders gewählt und/oder auf eine andere als die beschriebene Betriebs- oder Höchstspannung angepasst sein.
Die Erfindung ist nicht durch die Beschreibung anhand der Ausführungsbeispiele beschränkt.

### Bezugszeichenliste

- TF: Triggerbare Funkenstrecke
- TRG: Triggerschaltung
- TR: Transistor
- T1: Primärseite
- T2: Sekundärseite
- SBK: Spannungsbegrenzungskomponente
- D4, D5: Zener-Diode
- R1, R2, R3, R4: Widerstand
- C1, C2: Ladungsspeicher
- DI: Triggerdiode, Diac
- TH: Thyristor

## Patentansprüche

1. Funkenstreckenanordnung (FSA) zum Schutz einer elektrischen Komponente vor einer Überspannung, umfassend:
- einen Eingangsanschluss zum Anlegen einer Betriebsspannung zum Betreiben der elektrischen Komponente;
- eine triggerbare Funkenstrecke (TF) und eine Triggerschaltung (TRG), die einen ersten und einen zweiten Ladungsspeicher (C1, C2), eine Spannungsbegrenzungskomponente (SBK), eine Triggerdiode (DI), ein triggerbares Ableitelement (TH) und einen Transformator (TR) umfasst;
- wobei die triggerbare Funkenstrecke (TF) und die Triggerschaltung (TRG) an den Eingangsanschluss angeschlossen sind;
- wobei die Spannungsbegrenzungskomponente (SBK) und die Triggerdiode (DI) an den Eingangsanschluss angeschlossen sind und ausgelegt sind, einen Eingangsimpuls der Betriebsspannung in einem vorbestimmten Spannungsbereich durchzuschalten und den ersten Ladungsspeicher (C1) aufzuladen;
- wobei die Triggerschaltung (TRG) derart eingerichtet ist, dass das triggerbare Ableitelement (TH) spannungsabhängig über dem ersten Ladungsspeicher (C1) durchschaltet und den zweiten Ladungsspeicher (C2) über eine Primärseite (T1) des Transformators (TR) entlädt; und
- wobei eine Sekundärseite (T2) des Transformators (TR) mit der triggerbaren Funkenstrecke (TF) verbunden ist;
**dadurch gekennzeichnet, dass**
die Triggerschaltung (TRG) einen ersten Widerstand (R3) und einen dritten Widerstand (R4) und eine weitere Spannungsbegrenzungskomponente (D4, D5) umfasst, wobei der erste Widerstand (R3) an den Eingangsanschluss angeschlossen ist und der erste Widerstand (R3) und der dritte Widerstand (R4) einen Spannungsteiler für die Primärspannung des Transformators (TR) bilden, wobei die weitere Spannungsbegrenzungskomponente (D4, D5) eingerichtet ist, die Spannung an der Primärseite (T1) des Transformators (TR) auf einen vorgegebenen Wert zu begrenzen.

2. Funkenstreckenanordnung (FSA) nach Anspruch 1, wobei der vorbestimmte Spannungsbereich zwischen 420 Volt und 480 Volt liegt.

3. Funkenstreckenanordnung (FSA) nach mindestens einem der vorhergehenden Ansprüche, wobei die Spannungsbegrenzungskomponente (SBK) eine Mehrzahl von Zener-Dioden umfasst.

4. Funkenstreckenanordnung (FSA) nach Anspruch 3, wobei die Spannungsbegrenzungskomponente (SBK) derart ausgelegt ist, dass die Durchbruchspannungen der Zener-Dioden den vorbestimmten Spannungsbereich definieren.

5. Funkenstreckenanordnung (FSA) nach mindestens einem der vorhergehenden Ansprüche, wobei die Spannungsbegrenzungskomponente (SBK) 13 Zener-Dioden mit einer Durchbruchsspannung von je 33 Volt umfasst.

6. Funkenstreckenanordnung (FSA) nach mindestens einem der vorhergehenden Ansprüche, bei der das triggerbare Ableitelement (TH) einen Thyristor (TH) umfasst, wobei die Triggerdiode (DI) in Reihe zu der Spannungsbegrenzungskomponente (SBK) geschaltet und eingerichtet ist, den Thyristor (TH) in Abhängigkeit der Spannung über dem ersten Ladungsspeicher (C1) leitend zu schalten.

7. Funkenstreckenanordnung (FSA) nach mindestens einem der vorhergehenden Ansprüche, wobei der zweite Ladungsspeicher (C2) im Betrieb der Triggerschaltung (TRG) über den ersten Widerstand (R3) von der an dem Eingangsanschluss anliegenden Betriebsspannung aufgeladen wird.

8. Funkenstreckenanordnung (FSA) nach mindestens einem der vorhergehenden Ansprüche,
bei der die Triggerschaltung (TRG) einen zweiten Widerstand (R2) umfasst, wobei die Triggerschaltung (TRG) eingerichtet ist, den ersten Ladungsspeicher (C1) über den zweiten Widerstand (R2) durch den Eingangsimpuls aufzuladen.

9. Funkenstreckenanordnung (FSA) nach mindestens einem der vorhergehenden Ansprüche, welche eine Sicherung aufweist, die mit der triggerbaren Funkenstrecke (TF) verbunden ist, wobei die Sicherung eingerichtet ist, die elektrische Komponente von der Betriebsspannung zu trennen.

10. Elektronisches Bauteil mit einer Funkenstreckenanordnung (FSA) nach mindestens einem der vorhergehenden Ansprüche, welches die elektrische Komponente aufweist, und wobei das elektronische Bauteil derart eingerichtet ist, dass an der elektrischen Komponente die Betriebsspannung anliegt.

11. Elektronisches Bauteil nach Anspruch 10, wobei die elektrische Komponente ein Superkondensator ist, der eine elektrische Höchstspannung von 500 Volt aufweist.

## Claims

1. Spark gap arrangement (FSA) for protecting an electrical component against a surge voltage, comprising:
- an input terminal for the application of an operating voltage for the operation of the electrical component;
- a triggerable spark gap (TF) and a trigger circuit (TRG) which comprises a first and a second charge storage device (C1, C2), a voltage-limiting component (SBK), a trigger diode (DI), a triggerable arresting element (TH) and a transformer (TR);
- wherein the triggerable spark gap (TF) and the trigger circuit (TRG) are connected to the input terminal;
- wherein the voltage-limiting component (SBK) and the trigger diode (DI) are connected to the input terminal and are designed to through-connect an input pulse of the operating voltage in a predetermined voltage range and charge the first charge storage device (C1);
- wherein the trigger circuit (TRG) is configured in such a way that the triggerable arresting element (TH) through-connects in a voltage-dependent manner via the first charge storage device (C1) and discharges the second charge storage device (C2) via a primary side (T1) of the transformer (TR); and
- wherein a secondary side (T2) of the transformer (TR) is connected to the triggerable spark gap (TF);
**characterized in that**
the trigger circuit (TRG) comprises a first resistor (R3) and a third resistor (R4) and a further voltage-limiting component (D4, D5), wherein the first resistor (R3) is connected to the input terminal, and the first resistor (R3) and the third resistor (R4) form a voltage divider for the primary voltage of the transformer (TR), wherein the further voltage-limiting component (D4, D5) is configured to limit the voltage on the primary side (T1) of the transformer (TR) to a predefined value.

2. Spark gap arrangement (FSA) according to Claim 1, wherein the predetermined voltage range is between 420 volts and 480 volts.

3. Spark gap arrangement (FSA) according to at least one of the preceding claims, wherein the voltage-limiting component (SBK) comprises a plurality of Zener diodes.

4. Spark gap arrangement (FSA) according to Claim 3, wherein the voltage-limiting component (SBK) is designed in such a way that the breakdown voltages of the Zener diodes define the predetermined voltage range.

5. Spark gap arrangement (FSA) according to at least one of the preceding claims, wherein the voltage-limiting component (SBK) comprises 13 Zener diodes, each with a breakdown voltage of 33 volts.

6. Spark gap arrangement (FSA) according to at least one of the preceding claims, in which the triggerable arresting element (TH) comprises a thyristor (TH), wherein the trigger diode (DI) is connected in series with the voltage-limiting component (SBK) and is configured to switch the thyristor (TH) to a conducting state depending on the voltage over the first charge storage device (C1).

7. Spark gap arrangement (FSA) according to at least one of the preceding claims, wherein the second charge storage device (C2) is charged in the operation of the trigger circuit (TRG) via the first resistor (R3) by the operating voltage applied to the input terminal.

8. Spark gap arrangement (FSA) according to at least one of the preceding claims, in which the trigger circuit (TRG) comprises a second resistor (R2), wherein the trigger circuit (TRG) is configured to charge the first charge storage device (C1) via the second resistor (R2) by means of the input pulse.

9. Spark gap arrangement (FSA) according to at least one of the preceding claims, which has a safety cut-out which is connected to the triggerable spark gap (TF), wherein the safety cut-out is configured to disconnect an electrical component from the operating voltage.

10. Electronic element with a spark gap arrangement (FSA) according to at least one of the preceding claims, which has the electrical component, and wherein the electronic element is configured in such a way that the operating voltage is applied to the electrical component.

11. Electronic element according to Claim 10, wherein the electrical component is a super-capacitor which has a maximum electrical voltage of 500 volts.

## Revendications

1. Arrangement éclateur (FSA) destiné à la protection d'un composant électrique contre une surtension, comprenant :
- une borne d'entrée servant à l'application d'une tension de service destinée à faire fonctionner le composant électrique ;
- un éclateur déclenchable (TF) et un circuit de déclenchement (TRG), lequel comporte un premier et un deuxième accumulateur de charge (C1, C2), un composant limiteur de tension (SBK), une diode de déclenchement (DI), un élément de décharge déclenchable (TH) et un transformateur (TR) ;
- l'éclateur déclenchable (TF) et le circuit de déclenchement (TRG) étant raccordés à la borne d'entrée ;
- le composant limiteur de tension (SBK) et la diode de déclenchement (DI) étant raccordés à la borne d'entrée et conçus pour transférer une impulsion d'entrée de la tension de service dans une plage de tensions prédéterminée et charger le premier accumulateur de charge (C1) ;
- le circuit de déclenchement (TRG) étant conçu de telle sorte que l'élément de décharge déclenchable (TH) devient passant en fonction de la tension aux bornes du premier accumulateur de charge (C1) et décharge le deuxième accumulateur de charge (C2) par le biais d'un côté primaire (T1) du transformateur (TR) ; et
- un côté secondaire (T2) du transformateur (TR) est relié à l'éclateur déclenchable (TF) ;
**caractérisé en ce que**
le circuit de déclenchement (TRG) comporte une première résistance (R3) et une troisième résistance (R4) et un composant limiteur de tension supplémentaire (D4, D5), la première résistance (R3) étant raccordée à la borne d'entrée et la première résistance (R3) et la troisième résistance (R4) formant un diviseur de tension pour la tension primaire du transformateur (TR), le composant limiteur de tension supplémentaire (D4, D5) étant conçu pour limiter la tension du côté primaire (T1) du transformateur (TR) à une valeur prédéfinie.

2. Arrangement éclateur (FSA) selon la revendication 1, la plage de tensions prédéterminée étant comprise entre 420 volts et 480 volts.

3. Arrangement éclateur (FSA) selon au moins l'une des revendications précédentes, le composant limiteur de tension (SBK) comportant une pluralité de diodes Zener.

4. Arrangement éclateur (FSA) selon la revendication 3, le composant limiteur de tension (SBK) étant conçu de telle sorte que les tensions de claquage des diodes Zener définissent la plage de tensions prédéterminée.

5. Arrangement éclateur (FSA) selon au moins l'une des revendications précédentes, le composant limiteur de tension (SBK) comportant 13 diodes Zener ayant une tension de claquage de 33 volts chacune.

6. Arrangement éclateur (FSA) selon au moins l'une des revendications précédentes, l'élément de décharge déclenchable (TH) comportant un thyristor (TH), la diode de déclenchement (DI) étant branchée en série avec le composant limiteur de tension (SBK) et étant conçue pour commuter le thyristor (TH) à l'état passant en fonction de la tension aux bornes du premier accumulateur de charge (C1).

7. Arrangement éclateur (FSA) selon au moins l'une des revendications précédentes, le deuxième accumulateur de charge (C2), lors du fonctionnement du circuit de déclenchement (TRG), étant chargé par le biais de la première résistance (R3) par la tension de service appliquée à la borne d'entrée.

8. Arrangement éclateur (FSA) selon au moins l'une des revendications précédentes, avec lequel le circuit de déclenchement (TRG) comporte une deuxième résistance (R2), le circuit de déclenchement (TRG) étant conçu pour charger le premier accumulateur de charge (C1) par le biais de la deuxième résistance (R2) par l'impulsion d'entrée.

9. Arrangement éclateur (FSA) selon au moins l'une des revendications précédentes, lequel possède un fusible qui est relié à l'éclateur déclenchable (TF), le fusible étant conçu pour déconnecter le composant électrique de la tension de service.

10. Composant électronique comprenant un arrangement éclateur (FSA) selon au moins l'une des revendications précédentes, lequel possède le composant électrique, le composant électronique étant conçu de telle sorte que la tension de service est appliquée au composant électrique.

11. Composant électronique selon la revendication 10, le composant électrique étant un supercondensateur qui présente une tension maximale électrique de 500 volts.
